# EUROPÄISCHE PATENTSCHRIFT

(11) **EP 1 491 468 B1**
(45) Veröffentlichungstag und Bekanntmachung des Hinweises auf die Patenterteilung: **28.11.2007**
(21) Anmeldenummer: 04011355.7
(22) Anmeldetag: 13.05.2004
(51) Int. Cl.: B65G 53/46

(54) **Ventilvorrichtung und Verfahren zur zerstörungsfreien Rückhaltung rieselfähiger Materialien in Leitungswegen**
Sealing valve and method for the non-destructive retention of flowable bulk material in ducts
Dispositif de soupape et procédé de retention non-déstructive de matériau en vrac à écoulement dans des conduits

(30) Priorität: 16.05.2003 DE 10322270
(43) Veröffentlichungstag der Anmeldung: 29.12.2004
(73) Patentinhaber: Chemgineering GmbH, 65205 Wiesbaden (DE)
(72) Erfinder: Druckrey, Wolfgang, 69198 Schriesheim (DE)
(74) Vertreter: Ackermann, Joachim

(56) Entgegenhaltungen:
- DE-A- 3 311 655
- DE-B- 1 201 240
- US-A- 4 627 456

## Beschreibung

Die Erfindung betrifft ein Verschlussverfahren und hierfür geeignete Ventilvorrichtungen für rieselfähige, insbesondere rotationssymmetrisch geformte Materialien, wie beispielsweise Tabletten, Kapseln oder Dragees, wobei das Öffnen und Schließen der Ventilvorrichtung derart erfolgt, dass dabei keine Schüttgüter im Verschlussbereich des Ventils eingefangen, eingequetscht oder zerstört werden.

In der Literatur sind Ventilvorrichtungen zur Rückhaltung von rieselfähigen Schüttgütern weitreichend erläutert. Gängige Ausführungsformen sind Schieber, Klappen, Butterfly-Ventile oder Facetten-Ventile welche in jedem Prozess, in dem Schüttgut verarbeitet oder verpackt wird, vielfach eingebaut sind.

In US 5,865,210, US 5,620,167 oder US 6,497,245 sind Butterfly-Ventile beschrieben, welche zum Verschluss feststoffführender Leitungen sehr verbreitet sind. Bei diesen Systemen wird eine Platte, welche in der Regel an einer in der Mitte der Rohrleitung und senkrecht zur Hauptströmungsrichtung positionierten Welle befestigt ist, gedreht. Am Verschlusspunkt wird, wie in US 5,620,167 Fig. 4 gut zu erkennen ist, die Platte an einer Dichtfläche angepresst und somit der Leitungsweg vollständig abgedichtet. Nachteilig an diesem Ventil sind Schüttguteinschluss- oder -zerstörung im Bereich der Dichtfläche in der Verschlussposition der Ventilklappe. Zum erneuten Öffnen eines verschlossenen Ventils muss weiterhin gegen den Druck des dicht gepackten Schüttgutes gearbeitet werden bis der Materialabfluss beginnt, wozu ein Öffnungswinkel erforderlich ist, welcher mindestens die Spaltbreite des Korndurchmessers freigibt. Bei den in der pharmazeutischen Industrie üblichen Dragees, Tabletten oder Kapseln können daher in dem Schüttkörper erhebliche Druckkräfte auftreten, die zu unerwünscht hohem Abrieb oder einem Zermahlen einzelner dieser Schüttgutkörper führen.

US 2,774,371, US 287,788, US 1,545,696, US 2000853 oder US 2,001,271 seien hier beispielhaft für Ausführungsbeispiele von Schieberventilen genannt. Der Schieber wird zum Verschluss ganz oder teilweise und in der Regel senkrecht zur Hauptströmungsrichtung in dem Leitungsweg eingeführt. Der Dichtbereich ist zwischen der Kante des Schiebers und der Wandung des Leitungsweges oder in einer Nut. Vorteilhaft im Vergleich zu den vorgenannten Butterfly-Ventilen ist, dass der Schieber das Schüttgut nicht verdrängt, sonder quer zum Leitungsweg bewegt wird, so dass das Haufwerk keine zusätzliche Pressung erfährt. Nachteilig an diesen Ventilen ist der Raumbedarf, da der Schieber beim Öffnen mindestens teilweise aus dem Leitungsweg herausgeführt werden muss. Weiterhin findet auch hier in gewissem Umfang die Zerstörung von Material im Abdichtbereich statt, welche zu den vorgenannten unerwünschten Fehlchargen führt.

In GB 2,095,793, US 5,449,141 oder US 3,058,483 sind Iris-Diaphragma-Ventile beschrieben, bei welchen der Leitungsweg mittels eines Schlauchs aus flexiblem Material oder einer Textile verschlossen wird. Bei einem Iris-Diaphragma-Ventil ist dieser Schlauch im Leitungsweg eingebracht und an den Enden auf je einem Ring aufgespannt oder anderweitig fixiert, wobei mindestens einer der Ringe rotierend um die Achse des Leitungsweges bewegt werden kann. Im geöffneten Zustand werden der Leitungsweg und das Ventil fast ungehindert durchströmt. Zum Verschließen wird mindestens einer der Ringe der Schlauchenden um die Rotationsachse verdreht, wobei der Schlauchdurchmesser sich verringert und letztendlich der Leitungsweg verschlossen wird. Dabei bleiben die Ringe in der ursprünglichen Position oder bewegen sich aufeinander zu. Nachteilig an diesen inGB 2,095,793, US 5,449,141 oder US 3,058,483 gezeigten Verschlusssystemen ist, dass beim Verschlussvorgang Materialanteile in den Falten des flexiblen Schlauchs eingeschlossen und gegeneinander gepresst und zerrieben werden. Weiterhin unterliegt das Diaphragma hohen Scherkräften, womit die Gefahr von Abrieb oder Zerstörung des Basismaterials besteht, was gerade bei hohen Reinheitsanforderungen wie zum Beispiel in der pharmazeutischmedizinischen Industrie nachteilig ist, zudem ist das Diaphragma nur mit größerem Aufwand zu reinigen.

Die DE-A-43 32 295 beschreibt eine Ventilvorrichtung zum reversiblen Verschluß von Leitungswegen. Diese weist ein innerhalb eines senkrecht verlaufenden Rohres und unterhalb eines Verdrängungskörpers angebrachtes Futterrohr auf, das senkrecht verschoben wird und sobald dessen oberes Ende in den Hohlraum unterhalb des Verdrängungskörpers ragt, zu einem Verschluß des Rohres führt. Die bekannte Konstruktion ist nur für senkrecht verlaufende Rohre geeignet. Außerdem ist zum Schließen oder Öffnen des Rohres ein senkrechtes Verschieben des Futterrohres erforderlich. In manchen Fällen kann der Raum unterhalb des Futterrohres Schüttgut aufweisen, beispielsweise wenn in Strömungsrichtung gesehen unterhalb des Rohrs ein Materialstau auftritt. In solchen Fällen kann eine senkrechte Hubbewegung des Futterrohres in Strömungsrichtung zur Beschädigung des Schüttguts führen.
Aus der DE-A-33 11 655 ist eine Schüttgutschleuse für heterogene Feststoffe mit mehreren in einem Fallschacht angeordneten und wechselweise betätigbaren und senkrecht zur Längsachse des Leitungsweges bewegbaren Sperrschiebern bekannt. In der DE-AS-1,201,240 wird eine pneumatische Fördereinrichtung beschrieben, bei welcher in einer Förderleitung ein Unterdruck erzeugt wird.
Vielen aus dem Stand der Technik bekannten Verschlusssystemen wohnt der Mangel inne, dass ein nicht vermeidbarer Anteil an Material im Ventil selbst festgehalten und in der Regel auch mechanisch zerstört wird. Dies führt gerade auch in geschlossenen Produktions- oder Abfüllstraßen, wie sie in vielen Industriezweigen und vor allem in der medizinisch-pharmazeutischen Industrie üblich sind, zu einer beträchtlichen Zahl von Fehlchargen, weiche detektiert, ausgeschleust und entsorgt werden müssen. Weiterhin ist auch ein erhöhter Reinigungsaufwand an den Ventilen selbst die Folge, da das zerriebene Schüttgutmaterial in schlecht zugängliche Kanten und Rillen im Dichtbereich angepresst wird.
Die bekannte Schließvorrichtung zur Vermeidung mechanischer Beanspruchung des Schüttguts läßt noch einige Wünsche offen, da diese nur in senkrecht verlaufenden Rohren eingesetzt werden kann und da das Risiko der Beschädigung des Schüttguts in manchen Fällen nicht ausgeschlossen werden kann.
Aus dem bekannten Stand der Technik und den genannten Mängeln ergibt sich somit die Aufgabe, eine Ventilvorrichtung für rieselfähige Schüttgüter bereitzustellen, die in senkrecht und waagerecht verlaufenden Leitungswegen eingesetzt werden kann und bei der kein Material im Bereich der Ventildichtung weder kurz vor und in der Verschlussposition noch unterhalb des Bereichs der Ventildichtung eingeschlossen und zerstört wird.
Die vorliegende Erfindung löst diese Aufgabe gemäß dem Hauptanspruch, indem sie eine Ventilvorrichtung zum reversiblen Verschluss von Leitungswegen (1) für schüttfähige und insbesondere rotationssymmetrisch geformte Materialien (3), wie beispielsweise Tabletten, Kapseln oder Dragees offenbart, wobei die Leitungswege (1) insbesondere Rohrleitungen oder Behälterauslässe darstellen und wobei die Ventilvorrichtung mindestens ein um die Längsachse des Leitungsweges (1) oder eine dazu parallel verlaufende Achse oder um eine senkrecht zur Längsachse des Leitungsweges (1) verlaufende Achse drehbares oder schräg zur Längsachse des Leitungsweges (1) bewegliches Verschlusselement (8) aufweist, das eine Öffnungsposition und eine Schließposition einnehmen kann, und mindestens einen Abdichtbereich (9) sowie mindestens ein im Leitungsweg unmittelbar neben dem beweglichen Verschlusselement (8) angeordneten und mit diesem dichtend zusammen wirkenden statisches Verschlusselement (7) aufweist, bei der in Fließrichtung vor dem beweglichen Verschlusselement (8) mindestens eine Vorrichtung in Art einer Blende (4) vorgesehen ist, welche den freien Strömungsquerschnitt in dem Leitungsweg zwischen dieser Vorrichtung (4) und dem beweglichen Verschlusselement (8) begrenzt, wobei ein Schüttkegel (5) und mindestens ein vom Material (3) freier Raum (6) erzeugt wird, in Schließposition das statische Verschlusselement (7) oder das bewegliche Verschlusselement (8) zumindest teilweise in diesem vom Material freien Raum (6) außerhalb des Schüttkegels (5) liegt und mindestens ein Abdichtbereich (9) vorgesehen ist, der bei vollständigem Verschluss des Leitungsweges (1) in dem vom Material freien Raum (6) außerhalb des Schüttkegels (5) liegt und in den das bewegliche Verschlusselement (8) vor dem endgültigen Verschluss ohne Materialüberdeckung hineingeführt wird.

Das bewegliche Verschlusselement (8) kann auf beliebige Art und Weise von der Öffnungs- in die Schließposition und wieder zurück bewegt werden, solange diese Bewegung eine Drehung um die Längsachse des Leitungsweges oder um eine dazu parallel verlaufende Achse oder ein Verschieben schräg zur Längsachse des Leitungsweges darstellt oder eine Drehbewegung um eine senkrecht zum Leitungsweg verlaufende Achse ist.

Bevorzugt werden Ventilvorrichtungen, die ein bewegliches Verschlusselement (8) aufweisen, das durch Drehung um die Längsachse des Leitungsweges (1) von einer Öffnungsposition in eine Schließposition bewegt werden kann.

Ebenfalls bevorzugt werden Ventilvorrichtungen, die ein bewegliches Verschlusselement (8) aufweisen, das in Form eines Schiebers ausgestaltet ist, der durch Verschieben schräg zur Längsachse des Leitungsweges (1) von einer Öffnungsposition in eine Schließposition bewegt werden kann.

Ebenfalls bevorzugt werden Ventilvorrichtungen, die ein bewegliches Verschlusselement (8) aufweisen, das durch Drehung um eine senkrecht zur Längsachse des Leitungsweges (1) verlaufenden Achse von einer Öffnungsposition in eine Schließposition bewegt werden kann.

Die erfindungsgemäße Ventilvorrichtung kann zum Schließen des Leitungsweges (1) den Leitungsquerschnitt nur teilweise sperren. Dieses kann der Fall sein bei Ausführungsformen, bei denen in geschlossenem Zustand der Strömungsweg des Materials (3) vollständig durch Hindernisse verstellt ist, ohne dass eine vollständige Schließung des gesamten Querschnitts des Leitungsweges erforderlich ist.

Bevorzugt ist jedoch eine vollständige Schließung des Querschnitts. In diesem Fall bildet sich ein Abdichtbereich (9) im Innern des Leitungsweges (1) aus. Dabei kann es sich um einen Bereich handeln, in dem statisches und bewegliches Verschlusselement (7, 8) sich berühren, oder in dem das bewegliche Verschlusselement (8) und die Innenwand des Leitungsweges (1) sich berühren.

Da sich wie vorgenannt der Abdichtbereich (9) zumindest teilweise außerhalb des Materials befindet und das bewegliche Verschlusselement (8) aus dem Material (3) vor der Endstellung herausgeführt wird, kann kein Schüttgut mehr zwischen den Verschlusselementen (7, 8) im Abdichtbereich (9) zerrieben oder zerstört werden.

Die Erfindung betrifft bevorzugt eine Ventilvorrichtung, die mindestens einen Abdichtbereich (9) aufweist, der zwischen den Wänden des Leitungsweges (1) und/oder den Verschlusselementen (7, 8) angeordnet ist, und der bei vollständigem Verschluss des Leitungsweges (1) in dem vom Material freien Raum (6) außerhalb des Schüttkegels (5) liegt.

Die Gestaltung des bewegten Verschlusselements (8) ist in vielfältiger Weise möglich, wobei die Abhängigkeit zur vorgeschalteten Blende (4) zu beachten ist. Bei einem nicht senkrechten Leitungsweg ist das bewegliche Verschlusselement (8) vorteilhafterweise als Platte oder Schieber und bei einem senkrechten Leitungsweg idealerweise als Fassette oder als Kreisring gestaltet.

Der Werkstoff der Ventilvorrichtung ist nach statischen, mechanischen oder hygienischen Gesichtspunkten frei wählbar, und ist vorzugsweise ein hitze- und chemikalienbeständiger Kunststoff und idealerweise ein nichtrostender Edelstahl.

Es zeigte sich, dass auch für die Bewegungsabläufe gemäß dem vorgenannten Wirkprinzip viele Variationen realisiert werden können, wobei bei einem nicht senkrechten Leitungsweg und einer Platte als bewegtes Verschlusselement (8), diese Platte idealerweise senkrecht zur Hauptfließrichtung und rotierend um die Rotationsachse des Leitungsweges befahren wird. In einem senkrechten Leitungsweg und einem Kreisring oder einer Platte als bewegte Verschlusselemente (8), werden diese Verschlusselemente (8) idealerweise senkrecht zur Hauptfließrichtung gedreht oder schräg zur Hauptfließrichtung bewegt.

Erfindungsgemäß sind somit Verschlusssysteme offenbart, bei welchen das bewegliche Verschlusselement (8) das Schüttgut (3) nur minimal verdrängt, da es quer zum Leitungsweg bewegt wird, so dass das Haufwerk nur von einer Kante des Verschlusselements (8) durchpflügt wird und somit vor allem beim Öffnen keine zusätzliche Pressung oder Verdrängung erfährt.

In einer vorteilhaften Ausgestaltung der Ventilvorrichtung begrenzt die Blendenvorrichtung (4) den freien Strömungsquerschnitt des Leitungsweges nicht permanent, sondern wird nur kurz vor oder während dem Verschlussvorgang in den Leitungsweg hineingeklappt oder gedreht, so dass nur bedarfsweise eine Strömungsbehinderung erfolgt und das Schüttgut durch Einbauten nicht unnötig mechanisch belastet wird.

Es zeigte sich weiterhin, dass es vorteilhaft ist, die Blendenvorrichtung (4) und das bewegliche Verschlusselement (8) derart miteinander zu verbinden, dass diese immer gemeinsam bewegt werden. Diese Kopplung der Verschlussklappen oder - körper kann durch eine über Hebel realisierte mechanische Verbindung geschehen oder über eine elektronische gesteuerte Kopplung erfolgen, indem der Stellvorgang über unabhängige Stellmotoren oder übliche pneumatische oder hydraulische Systeme vorgenommen wird.

Der Erfindung liegt ein Verfahren zugrunde, welches ein übliches Vorurteil der Fachwelt überwindet, welches wie in allen bekannten und in den vorgenannten technischen Lösungen des Standes der Technik dargestellt davon ausgeht, man müsse durch den Verschluss den Materialstrom unterbrechen. Das durch die Erfindung offenbarte Verfahren beschreibt ein Wirkprinzip und einen Verschlussvorgang, bei welchem der Materialstrom unterbrochen wird und gegebenenfalls in einem zweiten Schritt der Leitungsweg verschlossen wird, wobei das schüttfähige Material durch die besondere Art des Unterbrechungs- und Schließvorganges mechanisch nicht belastet wird.
Die Erfindung betrifft daher auch ein Verfahren zum reversiblen Verschließen von Leitungswegen (1) für schüttfähige Materialien (3) unter Verwendung einer Ventilanordnung der oben genannte Art, wobei die Leitungswege (1) insbesondere Rohrleitungen oder Behälterauslässe darstellen, umfassend die Maßnahmen:
i) Erzeugen eines Schüttkegels aus dem Material (3) und mindestens eines vom Material (3) freien Raums (6) im Innern des Leitungsweges (1) durch mindestens eine Vorrichtung in Art einer Blende (4)
ii) Drehen mindestens eines beweglichen Verschlusselements (8) um die Längsachse des Leitungsweges (1) oder um eine dazu parallel verlaufende Achse oder um eine senkrecht zur Längsachse des Leitungsweges (1) verlaufende Achse oder Bewegen mindestens eines beweglichen Verschlusselements (8) schräg zur Längsachse des Leitungsweges (1) von einer Öffnungs- in eine Schließposition, wobei
iii) das bewegliche Verschlusselement (8) oder ein statisches Verschlusselement (7) sich in Schließposition zumindest teilweise im vom Material (3) freien Raum (6) befindet

Bevorzugt wird ein Verfahren bei dem das Verschließen des Leitungsweges (1) in mindestens zwei Stufen erfolgt, wobei in der ersten Stufe der Materialstrom vollständig unterbrochen wird, indem der Leitungsquerschnitt teilweise geschlossen und in der zweiten Stufe der Leitungsweg vollständig verschlossen wird.

Ein weiteres bevorzugtes Verfahren umfasst das Bewegen des beweglichen Verschlusselements (8) beim Schließen in eine Position, so dass sich zwischen den Wänden des Leitungsweges (1) und/oder weiteren Verschlusselementen (7, 8) mindestens ein Abdichtbereich (9) ausbildet, der bei vollständigem Verschluss des Leitungsweges (1) in dem vom Material freien Raum (6) außerhalb des Schüttkegels (5) liegt.

Noch ein weiteres bevorzugtes Verfahren umfasst das Erzeugen eines Schüttkegels (5) aus dem Material (3) und mindestens eines vom Material (3) freien Raums (6) im Innern des Leitungsweges (1) durch mindestens eine Vorrichtung in Art einer Blende (4) zeitgleich oder zeitlich vor dem Bewegungsbeginn des beweglichen Verschlusselements (8), so dass die Vorrichtung (4) nicht permanent den freien Querschnitt des Leitungsweges begrenzt.

In einer vorteilhaften Ausgestaltung dieses Verfahrens ist in Fließrichtung vor diesem mehrstufigen Verschlussvorgang mindestens eine Staustufe angeordnet, welche durch ein oder mehrere Einbauten gebildet wird. Diese Staustufe kann durch dem Fachmann bekannte Einbauten beliebiger Form gebildet werden, wobei die Staustufe mit der Verschlussvorrichtung derart zusammen wirkt, dass die Ausbildung eines definierten Schüttkegels sichergestellt wird. Weiterhin muss im Fließschatten der Blendenvorrichtung und vor der Verschlussvorrichtung ein ausreichender Hohlraum entstehen, in welchem der Abdichtbereich liegt und in welchen das bewegliche Verschlusselement kurz vor dem endgültigen Verschluss ohne Materialüberdeckung hineingeführt wird.

Weiterhin kann das erfindungsgemäße Verfahren dahingehend optimiert werden, dass die Staustufe nicht permanent den freien Querschnitt des Leitungsweges begrenzt, sondern zeitgleich oder zeitlich vor dem Bewegungsbeginn des Verschlusselements hinzugeschaltet wird. Dabei hat es sich als sehr vorteilhaft herausgestellt, wenn die Aktivierung der Staustufe und des Verschlussvorgangs in direkter mechanischer oder elektronischer Wirkverbindung stehen und vorteilhafterweise durch den selben Regelungs- oder Stellvorgang ausgelöst werden.

Der Erfindungsgegenstand wird nun anhand in der Zeichnung dargestellter Ausführungsbeispiele näher beschrieben. In der Zeichnung zeigt,
Fig. 1 eine Verschlussvorrichtung in einem nicht senkrechten Leitungsweg in geöffneter Position,
Fig. 2 die Verschlussvorrichtung nach Fig.1 in halb geöffneter Position,
Fig. 3 die Verschlussvorrichtung nach Fig.1 in der Position der vollständigen Materialrückhaltung,
Fig. 4 die Verschlussvorrichtung nach Fig.1 in geschlossener Position,
Fig. 5 eine weitere Verschlussvorrichtung in einem senkrechten Leitungsweg in geöffneter Position,
Fig. 6 die Verschlussvorrichtung nach Fig. 5 in geschlossener Position,
Fig. 7 eine Verschlussvorrichtung in einem senkrechten Leitungsweg in geöffneter Position,
Fig. 8 die Verschlussvorrichtung nach Fig. 7 in geschlossener Position,
Fig. 9 eine weitere Verschlussvorrichtung in einem senkrechten Leitungsweg in offener Position,
Fig. 10 die Verschlussvorrichtung nach Fig. 9 in geschlossener Position, und
Fig. 11 eine Aufrollung des oberen Rohres sowie des beweglichen Verschlusselements nach Fig. 9 und 10.

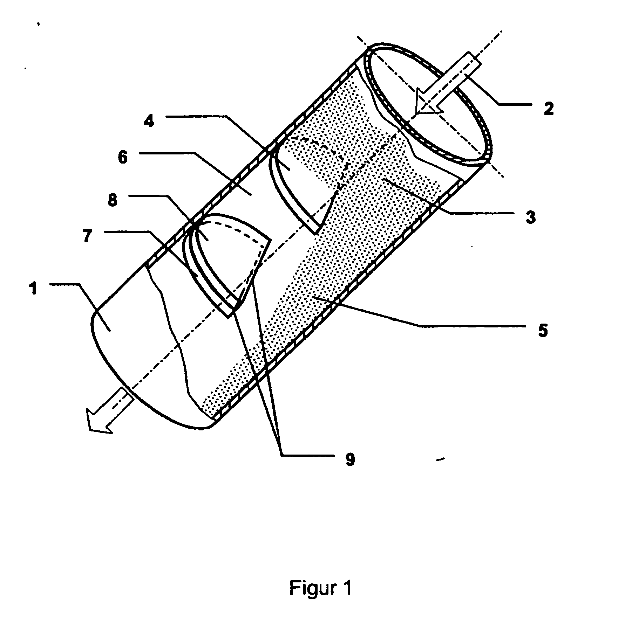

Fig. 1 zeigt einen nicht senkrecht angeordneten Leitungsweg (1), in welchem das unter Einfluss der Schwerkraft bewegte Schüttgut (3), welches hier als punktierte Fläche dargestellt ist, in Hauptströmungsrichtung (2) zuerst auf die Blende (4) trifft.

Durch diese Blende (4) wird ein Schüttkegel (5) und ein vom Schüttgut freier Hohlraum (6) oberhalb des Schüttkegels (5) ausgebildet. In geöffneter Ventilposition strömt das Schüttgut 3 in einem gewissen Abstand unterhalb des statischen Verschlusselementes (7) und des sich in Öffnungsposition befindlichen beweglichen Verschlusselements (8) hindurch.

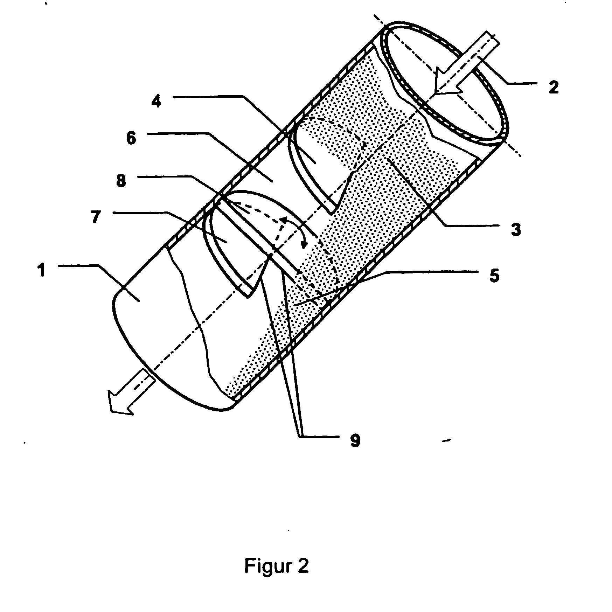

Zum Verschluss des Leitungsweges wird nun, wie in Fig. 2 gezeigt, das bewegliche Verschlusselement (8) senkrecht zur Hauptströmungsrichtung (2) und um die Achse des Leitungsweges (1) rotiert, wobei es in den Schüttkegel (5) eintaucht und den Materialstrom in der in Fig. 2 gezeigten Position teilweise begrenzt.

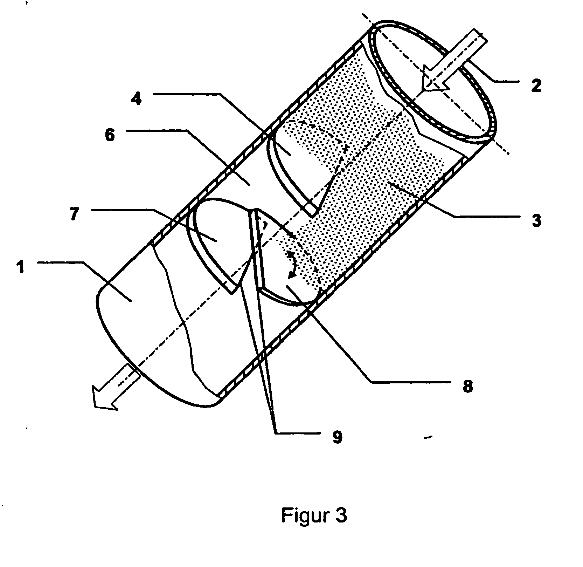

Die vollständige Materialrückhaltung wird mit der in Fig. 3 gezeigten Position des beweglichen Verschlusselementes (8) erreicht, welches bei oder kurz nach der vollständigen Materialrückhaltung aus dem Schüttkegel (5) herausgeführt wird. Im Abdichtbereich (9), welcher zwischen der Unterkante des statischen Verschlusselements (7) und der Oberkante des beweglichen Verschlusselements (8) liegt, ist kein Material vorhanden.

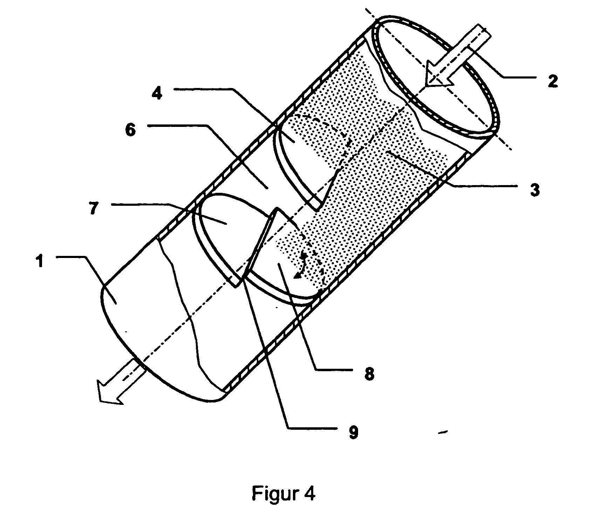

Fig. 4 zeigt die Position der Ventilvorrichtung aus Fig. 1-3 bei vollständigem Verschluss, wobei zu erkennen ist, dass der Abdichtbereich (9) außerhalb des Schüttkegels (5) und im Hohlraum (6) liegt.

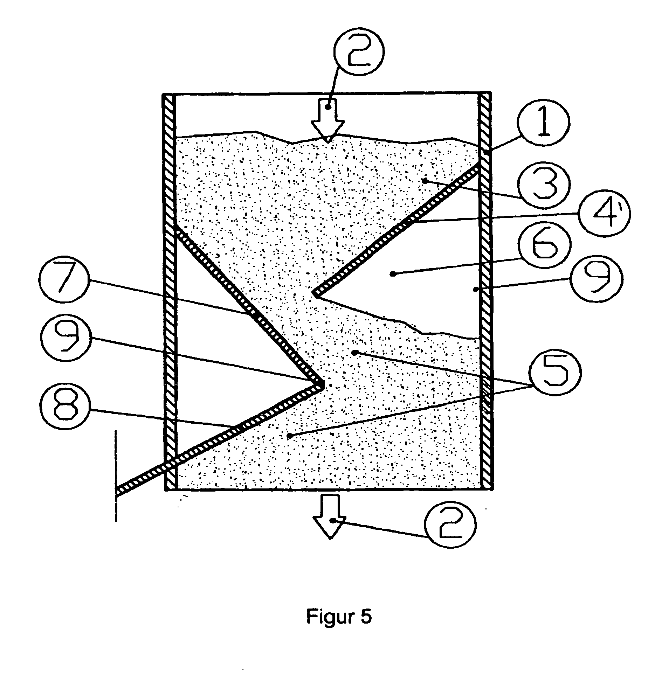

Fig. 5 zeigt eine in einem senkrechten Leitungsweg (1) angeordnete Ventilvorrichtung, in welchem das unter Einfluss der Schwerkraft bewegte Schüttgut (3) in Hauptströmungsrichtung (2) zuerst auf die Blende (4) und auf das statische Verschlusselement (7) trifft. Durch diese Blende (4) wird ein Schüttkegel (5) und ein vom Schüttgut freier Hohlraum (6) oberhalb des Schüttkegels (5) ausgebildet. In geöffneter Ventilposition strömt das Schüttgut (3) durch die von Blende (4) und statischem Verschlusselement (7) gebildete Öffnung im Leitungsweg (1) hindurch. Das bewegliche Verschlusselement (8) wird hier durch einen Schieber realisiert, der sich in Öffnungsposition befindet und die von Blende (4) und statischem Verschlusselement (7) gebildete Öffnung im Leitungsweg (1) freigibt.

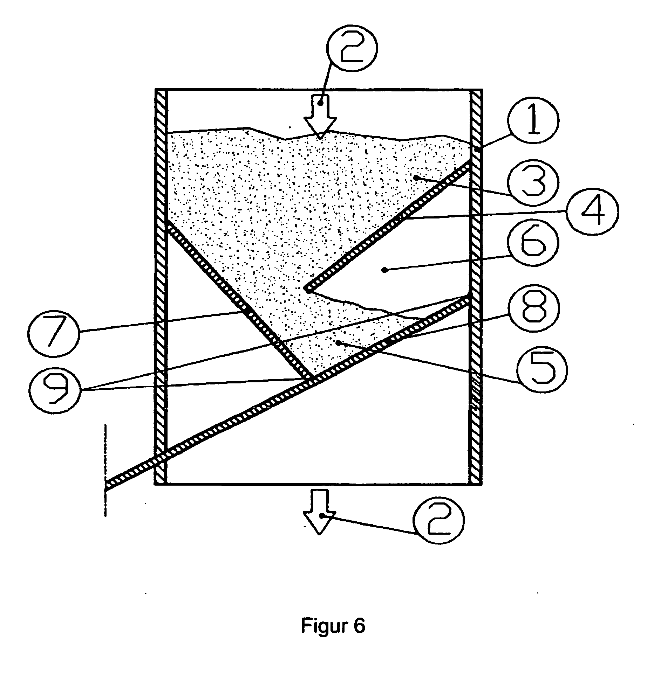

Zum Verschluss des Leitungsweges (1) wird nun, wie in Fig. 6 gezeigt, das bewegliche Verschlusselement (8) schräg zu dessen Längsachse verschoben, wobei es in den Schüttkegel (5) durchquert und in den vom Schüttgut (3) freien Hohlraum (6) eintaucht. In Schließposition bildet das bewegliche Verschlußelement (8) mit der Wandung des Leitungsweges (1) einen Abdichtbereich (9). Fig. 6 zeigt die Position der Ventilvorrichtung aus Fig. 5 bei vollständigem Verschluss, wobei zu erkennen ist, dass der Abdichtbereich (9) außerhalb des Schüttkegels (5) und im Hohlraum (6) liegt.

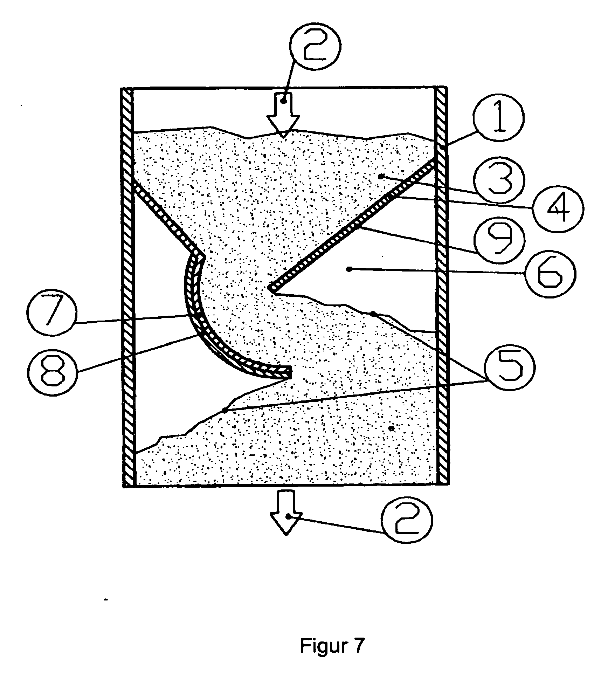

Fig. 7 zeigt eine weitere in einem senkrechten Leitungsweg (1) angeordnete Ventilvorrichtung, in welchem das unter Einfluss der Schwerkraft bewegte Schüttgut (3) in Hauptströmungsrichtung (2) zuerst auf die Blende (4) und auf das statische Verschlusselement (7) trifft. Dieses ist an seinem am Leitungsweg (1) angesetzten Ende als Leitblech ausgestaltet, das andere Ende weist die Form eines Kreissegmentes auf. Durch die Blende (4) wird ein Schüttkegel (5) und ein vom Schüttgut freier Hohlraum (6) oberhalb des Schüttkegels (5) ausgebildet. In geöffneter Ventilposition strömt das Schüttgut (3) durch die von Blende (4) und statischem Verschlusselement (7) gebildete Öffnung im Leitungsweg (1) hindurch. Das bewegliche Verschlusselement (8) besitzt hier die Form eines Kreissegmentes, das sich in Öffnungsposition unterhalb oder oberhalb des kreissegmentförmigen Abschlusses des statischen Verschlusselements (7) befindet und die von Blende (4) und statischem Verschlusselement (7) gebildete Öffnung im Leitungsweg (1) freigibt.

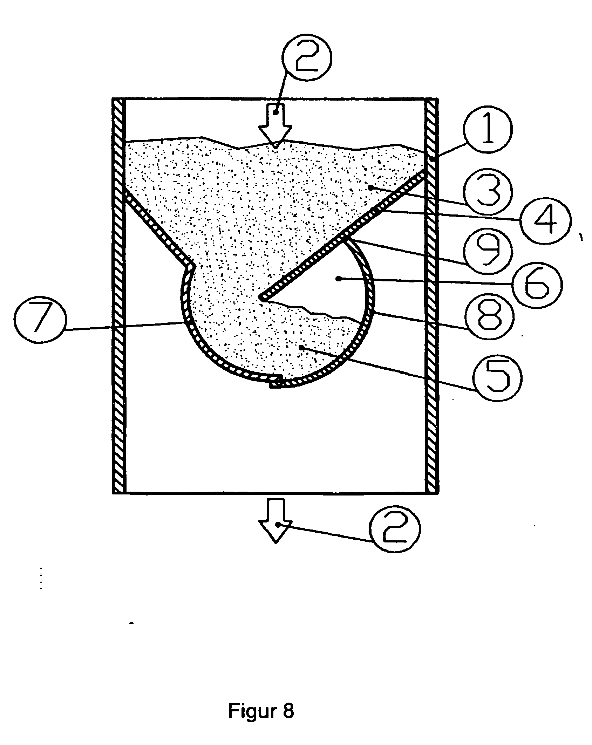

Zum Verschluss des Leitungsweges (1) wird nun, wie in Fig. 8 gezeigt, das bewegliche Verschlusselement (8) um eine quer zur Hauptströmungsrichtung (2) verlaufende Achse gedreht, wobei es in den Schüttkegel (5) durchquert und in den vom Schüttgut (3) freien Hohlraum (6) eintaucht. In Schließposition bildet das bewegliche Verschlußelement (8) mit der Blende (4) sowie dem kreissegmentförmigen Endes des statischen Verschlusselements einen Abdichtbereich (9). Fig. 8 zeigt die Position der Ventilvorrichtung aus Fig. 7 bei vollständigem Verschluss, wobei zu erkennen ist, dass der eine Teil des Abdichtbereichs (9) außerhalb des Schüttkegels (5) und im Hohlraum (6) liegt.

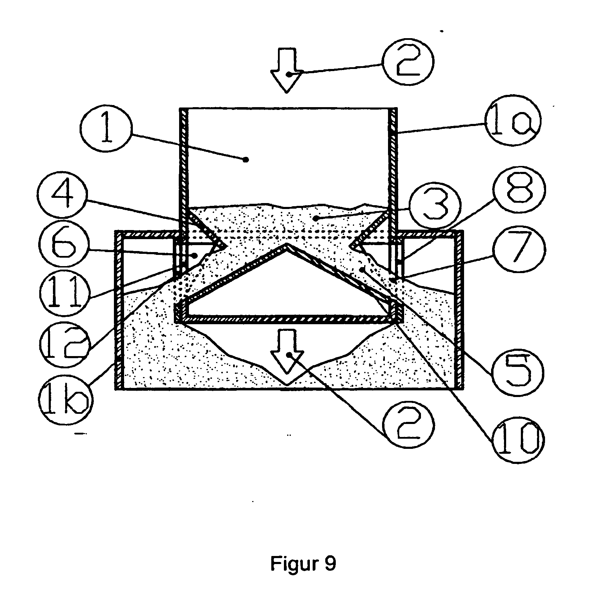

Fig. 9 zeigt eine weitere in einem senkrechten Leitungsweg (1) angeordnete Ventilvorrichtung, in welchem das unter Einfluss der Schwerkraft bewegte Schüttgut (3) in Hauptströmungsrichtung (2) zuerst auf die Blende (4) und auf Leitbleche (10) trifft. Leitungsweg (1) ist in dieser Ausgestaltung aus einem oberen Rohr (1a) und einem unteren Rohr (1b) aufgebaut, wobei ersteres in letzeres hineinragt. Das obere Rohr (1a) besitzt in seiner Wand in Höhe des in das untere Rohr (1b) hineinragenden Abschnittes mindestens eine Öffnung (11) (in Figur 9 sind zwei um 180° gegeneinander versetzte Öffnungen dargestellt), durch welche das Schüttgut (3) geführt durch die Leitbleche (10) in geöffneter Ventilposition in das untere Rohr (1b) strömen kann. Durch die Blende (4) wird ein Schüttkegel (5) und ein vom Schüttgut freier Hohlraum (6) oberhalb des Schüttkegels (5) ausgebildet. Das bewegliche Verschlusselement (8) besitzt hier die Form eines drehbaren Ringes, der mindestens eine Öffnung (12) aufweist und der über den unteren Teil des Rohres (1a) verläuft. In der Darstellung der Fig. 9 befinden sich Öffnungen (11) und (12) in gleichen Positionen, so dass der Leitungsweg (1) offen ist und das Schüttgut (3) hindurchströmen kann.

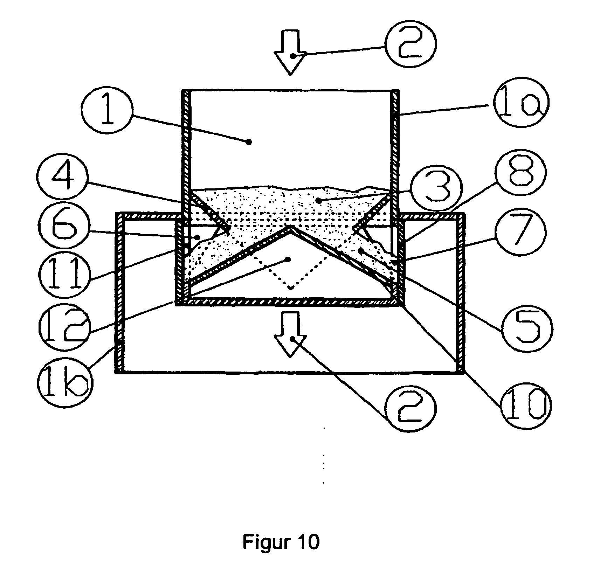

Zum Verschluss des Leitungsweges (1) wird nun, wie in Fig. 10 gezeigt, das bewegliche Verschlusselement (8) um die Längsachse des Leitungsweges (1) gedreht. Dabei durchquert das bewegliche Verschlusselement (8), also der Teil des Ringes, der nicht die Öffnung (12) darstellt, den Schüttkegel (5) und taucht in den vom Schüttgut (3) freien Hohlraum (6) ein. In Schließposition bildet das bewegliche Verschlußelement (8) mit dem unteren Teil des Rohres (1a) einen Abdichtbereich (9). Fig. 10 zeigt die Position der Ventilvorrichtung aus Fig. 9 bei vollständigem Verschluss, wobei zu erkennen ist, dass ein Teil des Abdichtbereichs (9) außerhalb des Schüttkegels (5) und im Hohlraum (6) liegt.

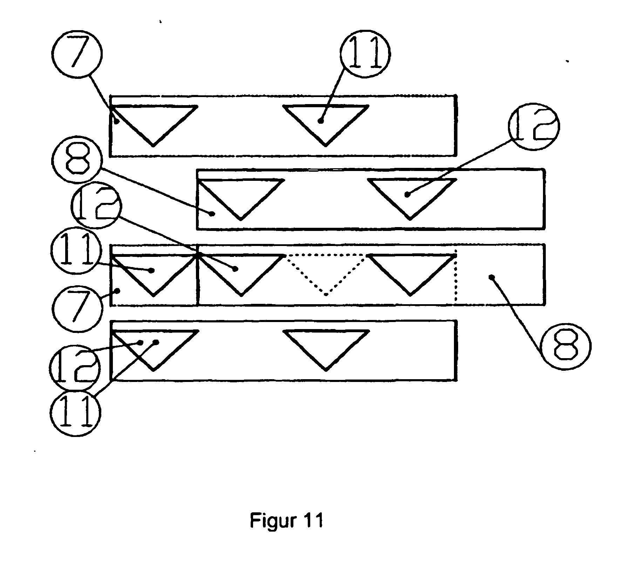

Eine Aufrollung des oberen Rohres (1 a), des beweglichen Verschlusselements (8) sowie deren Zusammenwirken in Öffnungs- und Schließposition ist in Fig. 11 dargestellt.

Die obere Skizze in Fig. 11 zeigt den unteren Teil des unteren Rohres (1a), der in den oberen Teil des Rohres (1b) hineinragt. Zu erkennen sind zwei dreieckig ausgestaltete Öffnungen (11). Die Rohrwandung bildet in dieser Ausführungsform das statische Verschlußelement (7).

Die zweite Skizze in Fig. 11 zeigt das kreisringförmig ausgestaltete bewegliche Verschlußelement (8), das zwei dreieckig ausgestaltete Öffnungen (12) aufweist und das auf den unteren Teil des unteren Rohres (1a) aufgesetzt ist.

Die dritte Skizze in Fig. 11 zeigt die Kombination des statischen und des beweglichen Verschlußelements (7, 8) in Schliessposition. Öffnungen (11, 12) befinden sich an getrennten Positionen und verschließen somit den unteren Teil des unteren Rohres (1a).

Die vierte und unterste Skizze in Fig. 11 zeigt die Kombination des statischen und des beweglichen Verschlußelements (7, 8) in Öffnungsposition. Öffnungen (11, 12) befinden sich in deckungsgleichen Positionen und geben somit den unteren Teil des unteren Rohres (1a) für den Durchtritt des Materials (3) frei. Die Einstellung der Öffnungs- und Schließposition erfolgt durch Drehen des beweglichen Verschlußelements um die Längsachse des unteren Rohres (1a).

## Patentansprüche

1. Ventilvorrichtung zum reversiblen Verschluss von Leitungswegen (1) für schüttfähige Materialien (3), wobei die Ventilvorrichtung mindestens ein um die Längsachse des Leitungsweges (1) oder eine dazu parallel verlaufende Achse oder um eine senkrecht zur Längsachse des Leitungsweges (1) verlaufende Achse drehbares oder schräg zur Längsachse des Leitungsweges (1) bewegliches Verschlusselement (8) aufweist, das eine Öffnungsposition und eine Schließposition einnehmen kann, mindestens ein im Leitungsweg unmittelbar neben dem beweglichen Verschlusselement (8) angeordnetes und mit diesem dichtend zusammenwirkendes statisches Verschlusselement (7) aufweist, in Fließrichtung vor dem beweglichen Verschlusselement (8) mindestens eine Vorrichtung in Art einer Blende (4) vorgesehen ist, welche den freien Strömungsquerschnitt in dem Leitungsweg (1) zwischen dieser Vorrichtung (4) und dem beweglichen Verschlusselement (8) begrenzt, wobei ein Schüttkegel (5) und mindestens ein vom Material freier Raum (6) erzeugt wird, das statische Verschlusselement (7) oder das bewegliche Verschlusselement (8) in Schließstellung der Ventilvorrichtung zumindest teilweise in dem vom Material freien Raum (6) außerhalb des Schüttkegels (5) liegt, mindestens ein Abdichtbereich (9) vorgesehen ist, der bei vollständigem Verschluss des Leitungsweges (1) in dem vom Material freien Raum (6) außerhalb des Schüttkegels (5) liegt und in den das bewegliche Verschlusselement (8) vor dem endgültigen Verschluss ohne Materialüberdeckung hineingeführt wird.

2. Ventilvorrichtung nach Anspruch 1, **dadurch gekennzeichnet, dass** der Abdichtbereich (9) zwischen den Wänden des Leitungsweges (1) und/oder den Verschlusselementen (7, 8) angeordnet ist, und der bei vollständigem Verschluss des Leitungsweges (1) in dem vom Material freien Raum (6) außerhalb des Schüttkegels (5) liegt.

3. Ventilvorrichtung nach Anspruch 1, **dadurch gekennzeichnet, dass** diese ein bewegliches Verschlusselement (8) aufweist, das durch Drehung um die Längsachse des Leitungsweges (1) von einer Öffnungsposition in eine Schließposition bewegt werden kann.

4. Ventilvorrichtung nach Anspruch 1, **dadurch gekennzeichnet, dass** diese ein bewegliches Verschlusselement (8) aufweist, das in Form eines Schiebers ausgestaltet ist und das durch Verschieben schräg zur Längsachse des Leitungsweges (1) von einer Öffnungsposition in eine Schließposition bewegt werden kann.

5. Ventilvorrichtung nach Anspruch 1, **dadurch gekennzeichnet, dass** diese ein bewegliches Verschlusselement (8) aufweist, das durch Drehung um eine senkrecht zur Längsachse des Leitungsweges (1) verlaufenden Achse von einer Öffnungsposition in eine Schließposition bewegt werden kann.

6. Ventilvorrichtung nach Anspruch 1, **dadurch gekennzeichnet, dass** sich diese in einem nicht senkrecht angeordneten Leitungsweg (1) befindet, ein nur einen Teil des Querschnitts des Leitungsweges (1) blockierendes statisches Verschlußelement (7) sowie unmittelbar darüber oder darunter angeordnet ein nur einen Teil des Querschnitts des Leitungsweges (1) blockierendes bewegliches Verschlußelement (8) aufweist, das um die Längsachse des Leitungsweges (1) gedreht werden kann, das in Öffnungsposition sich zusammen mit dem statischen Verschlußelement (7) in dem vom Material freien Raum (6) außerhalb des Schüttkegels (5) befindet und das in Schließposition zusammen mit dem statischen Verschlußelement (7) den gesamten Querschnitt des Leitungsweges (1) verschließt.

7. Ventilvorrichtung nach Anspruch 1, **dadurch gekennzeichnet, dass** sich diese in einem senkrechten Leitungsweg (1) befindet, mindestens eine Blende (4) und mindestens ein statisches Verschlusselement (7) aufweist, die innerhalb des Leitungsweges (1) eine Öffnung definieren, durch die in geöffneter Ventilposition das Schüttgut (3) strömt, wobei durch die Blende (4) ein Schüttkegel (5) und ein vom Schüttgut freier Hohlraum (6) oberhalb des Schüttkegels (5) definiert werden, sowie in Strömungsrichtung unterhalb der Blende (4) angeordnet mindestens ein bewegliches Verschlusselement (8) in Form eines Schiebers, der in Öffnungsposition den oder einen Teil des Leitungsquerschnitts freigibt und der in Schließposition schräg zur Längsachse des Leitungsweges (1) verschoben ist, wobei dieser den Schüttkegel (5) durchquert, in den vom Schüttgut (3) freien Hohlraum (6) eintaucht und mit der Wandung des Leitungsweges (1) einen Abdichtbereich (9) bildet, der außerhalb des Schüttkegels (5) und im Hohlraum (6) liegt.

8. Ventilvorrichtung nach Anspruch 1, **dadurch gekennzeichnet, dass** sich diese in einem senkrechten Leitungsweg (1) befindet, mindestens eine Blende (4) und mindestens ein statisches Verschlusselement (7) aufweist, die innerhalb des Leitungsweges (1) eine Öffnung definieren, durch die in geöffneter Ventilposition das Schüttgut (3) strömt, wobei das statische Verschlußelement (7) am Leitungsweg (1) angesetzt und an diesem Ende als Leitblech ausgestaltet ist, und am anderen Ende die Form eines Kreissegmentes aufweist, wobei durch die Blende (4) ein Schüttkegel (5) und ein vom Schüttgut freier Hohlraum (6) oberhalb des Schüttkegels (5) definiert werden, sowie in Strömungsrichtung unterhalb der Blende (4) angeordnet mindestens ein bewegliches Verschlusselement (8) in Form eines Kreissegmentes, das sich in Öffnungsposition unterhalb oder oberhalb des kreissegmentförmigen Abschlusses des statischen Verschlusselements (7) befindet und die von Blende (4) und statischem Verschlusselement (7) gebildete Öffnung im Leitungsweg (1) freigibt, und das in Schließposition um eine senkrecht zur Hauptströmungsrichtung (2) verlaufende Achse gedreht wird, wobei es in den Schüttkegel (5) durchquert und in den vom Schüttgut (3) freien Hohlraum (6) eintaucht und in Schließposition mit der Blende (4) sowie dem kreissegmentförmigen Endes des statischen Verschlusselements Abdichtbereiche (9) bildet, wobei der eine Abdichtbereich (9) außerhalb des Schüttkegels (5) und im Hohlraum (6) liegt.

9. Ventilvorrichtung nach Anspruch 1, **dadurch gekennzeichnet, dass** sich diese in einem senkrechten Leitungsweg (1) befindet, der aus einem oberen Rohr (1a) und einem unteren Rohr (1b) aufgebaut ist, wobei das obere Rohr (1a) in das untere Rohr (1b) hineinragt und das obere Rohr (1a) in seiner Wand in Höhe des in das untere Rohr (1b) hineinragenden Abschnittes mindestens eine Öffnung (11) aufweist, im oberen Rohr (1a) mindestens eine Blende (4) aufweist, die einen Schüttkegel (5) und einen vom Schüttgut (3) freien Hohlraum (6) oberhalb des Schüttkegels (5) definiert, und mindestens ein Leitblech (10) vorgesehen ist, welches das Schüttgut (3) in Richtung der Öffnung (11) leitet, sowie mindestens ein bewegliches Verschlusselement (8) in Form eines drehbaren Ringes, der mindestens eine Öffnung (12) aufweist, der in Öffnungsposition der Ventilvorrichtung so positioniert ist, dass Öffnungen (11) und (12) eine gemeinsame Öffnung definieren, so dass Schüttgut (3) hindurchströmen kann und der in Schließposition durch Drehen des Ringes um die Längsachse des Leitungsweges (1) so positioniert ist, dass der Teil des Ringes, der nicht die Öffnung (12) darstellt, den Schüttkegel (5) durchquert und in den vom Schüttgut (3) freien Hohlraum (6) eintaucht, so dass das bewegliche Verschlußelement (8) in Schließposition mit dem unteren Teil des Rohres (1a) einen Abdichtbereich (9) bildet, von dem ein Teil außerhalb des Schüttkegels (5) und im Hohlraum (6) liegt.

10. Vorrichtung nach Anspruch 1, **dadurch gekennzeichnet, dass** das bewegliche Verschlusselement (8) als Platte, Schieber, Fassette oder als Kreisring geformt ist.

11. Vorrichtung nach Anspruch 1, **dadurch gekennzeichnet, dass** das bewegliche Verschlusselement (8) bei einem nicht senkrechten Leitungsweg (1) senkrecht zur Hauptfließrichtung und in einer Drehbewegung um die Längsachse des Leitungsweges (1) und bei einem senkrechten Leitungsweg (1) senkrecht zur Längsachse des Leitungsweges gedreht oder schräg zur Längsachse des Leitungsweges (1) bewegt wird.

12. Vorrichtung nach Anspruch 1, **dadurch gekennzeichnet, dass** die Vorrichtung in Art einer Blende (4) beweglich ist und nur kurz vor oder während des Verschlussvorgangs den Leitungsweg (1) begrenzt.

13. Vorrichtung nach Anspruch 8, **dadurch gekennzeichnet, dass** die Vorrichtung in Art einer Blende (4) und das bewegliche Verschlusselement (8) derart miteinander verbunden sind, dass diese gemeinsam bewegt werden, wobei vorteilhafterweise eine direkte mechanische Verbindung und/oder eine elektronische gesteuerte Kopplung vorgesehen ist.

14. Verfahren zum reversiblen Verschließen von Leitungswegen (1) für schüttfähige Materialien (3)) unter Verwendung einer Ventilanordnung nach einem der vorangehenden Ansprüche umfassend die Maßnahmen:
i) Erzeugen eines Schüttkegels aus dem Material (3) und mindestens eines vom Material (3) freien Raums (6) im Innern des Leitungsweges (1) durch mindestens eine Vorrichtung in Art einer Blende (4),
ii) Drehen mindestens eines beweglichen Verschlusselements (8) um die Längsachse des Leitungsweges (1) oder um eine dazu parallel verlaufende Achse oder um eine senkrecht zur Längsachse des Leitungsweges (1) verlaufende Achse oder Bewegen mindestens eines beweglichen Verschlusselements (8) schräg zur Längsachse des Leitungsweges (1) von einer Öffnungs- in eine Schließposition, wobei
iii) das bewegliche Verschlusselement (8) oder ein statisches Verschlusselement (7) sich in Schließposition zumindest teilweise im vom Material (3) freien Raum (6) befindet

15. Verfahren nach Anspruch 14, **dadurch gekennzeichnet, dass** das Verschließen des Leitungsweges (1) in mindestens zwei Stufen erfolgt, wobei in der ersten Stufe der Materialstrom vollständig unterbrochen wird, indem der Leitungsquerschnitt teilweise geschlossen und in der zweiten Stufe der Leitungsweg vollständig verschlossen wird.

16. Verfahren nach Anspruch 14, **dadurch gekennzeichnet, dass** das bewegliche Verschlusselement (8) beim Schließen in eine Position bewegt wird, so dass sich zwischen den Wänden des Leitungsweges (1) und/oder weiteren Verschlusselementen (7, 8) mindestens ein Abdichtbereich (9) ausbildet, der bei vollständigem Verschluss des Leitungsweges (1) in dem vom Material freien Raum (6) außerhalb des Schüttkegels (5) liegt.

17. Verfahren nach Anspruch 14, **dadurch gekennzeichnet, dass** das Erzeugen eines Schüttkegels (5) aus dem Material (3) und mindestens eines vom Material (3) freien Raums (6) im Innern des Leitungsweges (1) durch mindestens eine Vorrichtung in Art einer Blende (4) zeitgleich oder zeitlich vor dem Bewegungsbeginn des beweglichen Verschlusselements (8) erfolgt, so dass die Vorrichtung (4) nicht permanent den freien Querschnitt des Leitungsweges begrenzt.

18. Verfahren nach Anspruch 14, **dadurch gekennzeichnet, dass** die Aktivierung der Vorrichtung in Art einer Blende (4) und des Verschlussvorgangs in direkter mechanischer und/oder elektronischer Wirkverbindung stehen und vorteilhafterweise durch nur einen Regelungs- oder Stellvorgang ausgelöst werden.

## Claims

1. A valve device for the reversible closure of ducts (1) for pourable materials (3), wherein the valve device has at least one closure element (8), which is rotatable about the longitudinal axis of the duct (1) or about an axis running parallel thereto or about an axis running perpendicularly to the longitudinal axis of the duct (1), or is movable obliquely with respect to the longitudinal axis of the duct (1) and can take up an open position and a closed position, has at least one static closure element (7), which is arranged in the duct directly next to the movable closure element (8) and interacts with the latter in a sealing manner, at least one device in the manner of a panel (4) is provided upstream of the movable closure element (8) in the flow direction and delimits the free flow cross section in the duct (1) between said device (4) and the movable closure element (8), wherein a pouring cone (5) and at least one space (6) which is free from material are produced, the static closure element (7) or the movable closure element (8), in the closed position of the valve device, is at least partially located outside the pouring cone (5) in the space (6) which is free from the material, at least one sealing region (9) is provided which, when the duct (1) is completely closed, is located outside the pouring cone (5) in the space (6) which is free from material, and into which the movable closure element (8) is inserted without overlapping of material before the final closure.

2. The valve device as claimed in claim 1, wherein the sealing region (9) is arranged between the walls of the duct (1) and/or the closure elements (7, 8) and, when the duct (1) is completely closed, is located outside the pouring cone (5) in the space (6) which is free from material.

3. The valve device as claimed in claim 1, wherein the latter has a movable closure element (8) which can be moved from an open position into a closed position by rotation about the longitudinal axis of the duct (1).

4. The valve device as claimed in claim 1, wherein the latter has a movable closure element (8) which is configured in the form of a slide and which can be moved from an open position into a closed position by displacement obliquely with respect to the longitudinal axis of the duct (1).

5. The valve device as claimed in claim 1, wherein the latter has a movable closure element (8) which can be moved from an open position into a closed position by rotation about an axis running perpendicularly to the longitudinal axis of the duct (1).

6. The valve device as claimed in claim 1, wherein the latter is located in a duct (1) which is not arranged vertically, has a static closure element (7) blocking only part of the cross section of the duct (1) and, arranged directly above or below said closure element, a movable closure element (8) which blocks only part of the cross section of the duct (1), can be rotated about the longitudinal axis of the duct (1) and, in the open position, is located together with the static closure element (7) outside the pouring cone (5) in the space (6) which is free from material, and, in the closed position, together with the static closure element (7) closes the entire cross section of the duct (1).

7. The valve device as claimed in claim 1, wherein the latter is located in a vertical duct (1), has at least one panel (4) and at least one static closure element (7), which, within the duct (1), define an opening through which the bulk material (3) flows in the open position of the valve, the panel (4) defining a pouring cone (5) and a cavity (6) which is free from bulk material above the pouring cone (5), and at least one movable closure element (8) in the form of a slide being arranged in the direction of flow below the panel (4), the slide, in the open position, releasing the or part of the duct cross section and, in the closed position, being displaced obliquely with respect to the longitudinal axis of the duct (1), said slide crossing the pouring cone (5), dipping into the cavity (6) which is free from bulk material (3) and, together with the wall of the duct (1), forming a sealing region (9) which is located outside the pouring cone (5) and in the cavity (6).

8. The valve device as claimed in claim 1, wherein the latter is located in a vertical duct (1), has at least one panel (4) and at least one static closure element (7), which, within the duct (1), define an opening through which the bulk material (3) flows in the open position of the valve, the static closure element (7) being fitted to the duct (1) and, at this end, being configured as a baffle plate and, at the other end, having the form of a segment of a circle, the panel (4) defining a pouring cone (5) and a cavity (6) which is free from bulk material above the pouring cone (5), and at least one movable closure element (8) in the form of a segment of a circle is arranged below the panel (4) in the direction of flow, said closure element, in the open position, being located below or above that end of the static closure element (7) which is in the form of a segment of a circle and releases the opening, formed by panel (4) and static closure element (7), in the duct (1), and which closure element, in the closed position, is rotated about an axis running perpendicularly to the main direction of flow (2), said closure element crossing the pouring cone (5) and dipping into the cavity (6) which is free from bulk material (3) and, in the closed position, forming sealing regions (9) together with the panel (4) and that end of the static closure element which is in the form of a segment of a circle, with one sealing region (9) being located outside the pouring cone (5) and in the cavity (6).

9. The valve device as claimed in claim 1, wherein the latter is located in a vertical duct (1) which is constructed from an upper pipe (1a) and a lower pipe (1b), the upper pipe (1a) projecting into the lower pipe (1b) and the upper pipe (1a) having at least one opening (11) in its wall level with the section projecting into the lower pipe (1b), the upper pipe (1a) having at least one panel (4) which defines a pouring cone (5) and a cavity (6) which is free from the bulk material (3) above the pouring cone (5), and at least one baffle plate (10) is provided which conducts the bulk material (3) in the direction of the opening (11), and at least one movable closure element (8) in the form of a rotatable ring which has at least one opening (12), in the open position of the valve device is positioned in such a manner that openings (11) and (12) define a common opening such that bulk material (3) can flow through and, in the closed position, is positioned, by means of rotation of the ring about the longitudinal axis of the duct (1), in such a manner that the part of the ring which does not constitute the opening (12) crosses the pouring cone (5) and dips into the cavity (6) which is free from bulk material (3), and therefore, in the closed position, the movable closure element (8) forms, together with the lower part of the pipe (1a), a sealing region (9) of which part is located outside the pouring cone (5) and in the cavity (6).

10. The device as claimed in claim 1, wherein the movable closure element (8) is formed as a plate, slide, facet or as a circular ring.

11. The device as claimed in claim 1, wherein, if a duct (1) is not vertical, the movable closure element (8) is moved perpendicularly to the main direction of flow and in a rotational movement about the longitudinal axis of the duct (1), and, if a duct (1) is vertical, is rotated perpendicularly to the longitudinal axis of the duct or is moved obliquely with respect to the longitudinal axis of the duct (1).

12. The device as claimed in claim 1, wherein the device is movable in the manner of a panel (4) and restricts the duct (1) only shortly before or during the closure operation.

13. The device as claimed in claim 8, wherein the device in the manner of a panel (4) and the movable closure element (8) are connected to each other in such a manner that they are moved together, with, advantageously, a direct mechanical connection and/or an electronic controlled coupling being provided.

14. A method for the reversible closure of ducts (1) for pourable materials (3) with the use of a valve arrangement as claimed in one of the preceding claims, comprising the following measures:
i) producing a pouring cone from the material (3) and at least one space (6) which is free from the material (3) in the interior of the duct (1) by means of at least one device in the manner of a panel (4),
ii) rotating at least one movable closure element (8) about the longitudinal axis of the duct (1) or about an axis running parallel thereto or about an axis running perpendicularly to the longitudinal axis of the duct (1) or moving at least one movable closure element (8) obliquely with respect to the longitudinal axis of the duct (1) from an open into a closed position,
iii) the movable closure element (8) or a static closure element (7), in the closed position, being located at least partially in the space (6) which is free from the material (3).

15. The method as claimed in claim 14, wherein the closing of the duct (1) takes place in at least two stages, the flow of material being completely interrupted in the first stage by the duct cross section being partially closed, and the duct being completely closed in the second stage.

16. The method as claimed in claim 14, wherein, during the closing operation, the movable closure element (8) is moved into a position such that at least one sealing region (9) is formed between the walls of the duct (1) and/or further closure elements (7, 8), which sealing region, when the duct (1) is completely closed, is located outside the pouring cone (5) in the space (6) which is free from the material.

17. The method as claimed in claim 14, wherein the producing of a pouring cone (5) from the material (3) and of at least one space (6) which is free from the material (3) in the interior of the duct (1) by means of at least one device in the manner of a panel (4) takes place at the same time as or temporally before the beginning of the movement of the movable closure element (8), and therefore the device (4) does not permanently restrict the free cross section of the duct.

18. The method as claimed in claim 14, wherein the activation of the device in the manner of a panel (4) and the activation of the closure operation are in direct mechanical and/or electronic operative connection and are advantageously initiated just by a control or actuation process.

## Revendications

1. Dispositif de soupape pour la fermeture réversible de conduites (1) de matériaux en vrac (3), le dispositif de soupape présentant au moins un élément de fermeture (8) mobile de manière oblique par rapport à l'axe longitudinal de la conduite (1) ou pouvant tourner autour de l'axe longitudinal de la conduite (1) ou d'un axe s'étendant parallèlement à celui-ci ou d'un axe s'étendant perpendiculairement à l'axe longitudinal de la conduite (1), l'élément pouvant adopter une position ouverte et une position fermée, présentant au moins un élément de fermeture statique (7) disposé dans la conduite directement à côté de l'élément de fermeture mobile (8) et coopérant avec celui-ci de manière étanche, au moins un dispositif de type obturateur (4) étant prévu dans le sens d'écoulement en amont de l'élément de fermeture mobile (8), lequel dispositif limite la section d'écoulement libre dans la conduite (1) entre ce dispositif (4) et l'élément de fermeture mobile (8), un cône d'évacuation (5) et au moins un espace (6) sans matériau étant générés, l'élément de fermeture statique (7) ou l'élément de fermeture mobile (8) dans la position fermée du dispositif de soupape se trouvant au moins partiellement dans l'espace (6) sans matériau à l'extérieur du cône d'évacuation (5), au moins une zone d'étanchéité (9) étant prévue, laquelle se trouve en cas de fermeture complète de la conduite (1) dans l'espace (6) sans matériau à l'extérieur du cône d'évacuation (5) et l'élément de fermeture mobile (8) étant introduit sans recouvrement de matériau avant la fermeture définitive.

2. Dispositif de soupape selon la revendication 1 **caractérisé en ce que** la zone d'étanchéité (9) est disposée entre les parois de la conduite (1) et/ou les éléments de fermeture (7, 8) et se trouve en cas de fermeture complète de la conduite (1) dans l'espace (6) sans matériau à l'extérieur du cône d'évacuation (5).

3. Dispositif de soupape selon la revendication 1, **caractérisé en ce que** celui-ci présente un élément de fermeture mobile (8) qui peut être déplacé par rotation autour de l'axe longitudinal de la conduite (1) d'une position ouverte à une position fermée.

4. Dispositif de soupape selon la revendication 1, **caractérisé en ce que** celui-ci présente un élément de fermeture mobile (8) qui est réalisé sous forme d'un coulisseau et qui peut se mouvoir par déplacement de manière oblique par rapport à l'axe longitudinal de la conduite (1) d'une position ouverte à une position fermée.

5. Dispositif de soupape selon la revendication 1, **caractérisé en ce que** celui-ci présente un élément de fermeture mobile (8), qui peut être déplacé par rotation autour d'un axe s'étendant perpendiculairement à l'axe longitudinal de la conduite (1) d'une position ouverte à une position fermée.

6. Dispositif de soupape selon la revendication 1, **caractérisé en ce que** celui-ci se trouve dans une conduite (1) disposée de manière non perpendiculaire, présente un élément de fermeture statique (7) bloquant seulement une partie de la section de la conduite (1) ainsi que directement au-dessus et en dessous un élément de fermeture mobile (8) bloquant seulement une partie de la section de la conduite (1), qui peut tourner autour de l'axe longitudinal de la conduite (1), qui se trouve dans la position ouverte avec l'élément de fermeture statique (7) dans l'espace (6) sans matériau à l'extérieur du cône d'évacuation (5) et qui, en position fermée, ferme avec l'élément de fermeture statique (7) l'ensemble de la section de la conduite (1).

7. Dispositif de soupape selon la revendication 1, **caractérisé en ce que** celui-ci se trouve dans une conduite (1) verticale, présente au moins un obturateur (4) et au moins un élément de fermeture statique (7) qui définissent une ouverture à l'intérieur de la conduite (1), par laquelle s'écoule le matériau en vrac (3) dans la position ouverte de la soupape, dans lequel l'obturateur (4) définit un cône d'évacuation (5) et un espace creux (6) sans matériau en vrac au-dessus du cône d'évacuation (5), ainsi que disposé sous l'obturateur (4) dans le sens d'écoulement au moins un élément de fermeture mobile (8) sous forme d'un coulisseau, qui libère en position ouverte l'une ou l'autre partie de la section de conduite et qui est déplacé en position fermée de manière oblique par rapport à l'axe longitudinal de la conduite (1), dans lequel celui-ci traverse le cône d'évacuation (5), plonge dans l'espace creux (6) sans matériau en vrac (3) et forme avec la paroi de la conduite (1) une zone d'étanchéité (9) qui se trouve à l'extérieur du cône d'évacuation (5) et dans l'espace creux (6).

8. Dispositif de soupape selon la revendication 1, **caractérisé en ce que** celui-ci se trouve dans une conduite (1) verticale, présente au moins un obturateur (4) et au moins un élément de fermeture statique (7) qui définissent une ouverture à l'intérieur de la conduite (1), par laquelle s'écoule le matériau en vrac (3) dans la position ouverte de la soupape, dans lequel l'élément de fermeture statique (7) est fixé sur la conduite (1) et est réalisé à cette extrémité sous forme de tôle de guidage, et prend au niveau de l'autre extrémité la forme d'un segment circulaire, dans lequel l'obturateur (4) définit un cône d'évacuation (5) et un espace creux (6) sans matériau en vrac au-dessus du cône d'évacuation (5), ainsi que disposé sous l'obturateur (4) dans le sens d'écoulement au moins un élément de fermeture mobile (8) sous forme d'un segment circulaire, qui se trouve en position ouverte en dessous ou au-dessus de l'extrémité en forme de segment circulaire de l'élément de fermeture statique (7) et libère dans la conduite (1) l'ouverture formée par l'obturateur (4) et l'élément de fermeture statique (7) et qui tourne dans la position fermée autour d'un axe s'étendant perpendiculairement au sens principal d'écoulement (2), dans lequel il traverse le cône d'évacuation (5) et plonge dans l'espace creux (6) sans matériau en vrac (3) et forme en position fermée avec l'obturateur (4) ainsi qu'avec l'extrémité en forme de segment circulaire de l'élément de fermeture statique des zones d'étanchéité (9), l'une des zones d'étanchéité (9) étant située à l'extérieur du cône d'évacuation (5) et dans l'espace creux (6).

9. Dispositif de soupape selon la revendication 1, **caractérisé en ce que** celui-ci se trouve dans une conduite (1) verticale, qui est formée par un tube supérieur (1a) et un tube inférieur (1b), dans lequel le tube supérieur (1a) pénètre dans le tube inférieur (1b) et le tube supérieur (1a) présente dans sa paroi à hauteur de la partie pénétrant dans le tube inférieur (1b) au moins une ouverture (11), présente dans le tube supérieur (1a) au moins un obturateur (4) qui définit un cône d'évacuation (5) et un espace creux (6) sans matériau en vrac (3) au-dessus du cône d'évacuation (5), et dans lequel est prévue au moins une tôle de guidage (10), laquelle conduit le matériau en vrac (3) en direction de l'ouverture (11), ainsi qu'au moins un élément de fermeture mobile (8) sous forme d'une bague rotative qui présente au moins une ouverture (12), qui est positionnée dans la position ouverte du dispositif de soupape de sorte que des ouvertures (11) et (12) définissent une ouverture commune, de sorte que le matériau en vrac (3) peut s'y écouler et qui est positionné dans la position fermée en tournant la bague autour de l'axe longitudinal de la conduite (1) de sorte que la partie de la bague qui ne constitue pas l'ouverture (12) traverse le cône d'évacuation (5) et plonge dans l'espace creux (6) sans matériau en vrac (3) de façon que l'élément de fermeture mobile (8) forme en position fermée avec la partie inférieure du tube (1a) une zone d'étanchéité (9) dont une partie se situe à l'extérieur du cône d'évacuation (5) et dans l'espace creux (6).

10. Dispositif selon la revendication 1, **caractérisé en ce que** l'élément de fermeture mobile (8) est réalisé sous forme de plaque, coulisseau, facette ou comme couronne.

11. Dispositif selon la revendication 1, **caractérisé en ce que** dans le cas d'une conduite (1) non verticale, l'élément de fermeture mobile (8) est tourné perpendiculairement au sens principal d'écoulement et dans un mouvement de rotation autour de l'axe longitudinal de la conduite (1) et dans le cas d'une conduite (1) verticale perpendiculairement à l'axe longitudinal de la conduite ou est déplacé de manière oblique par rapport à l'axe longitudinal de la conduite (1).

12. Dispositif selon la revendication 1, **caractérisé en ce que** le dispositif est mobile à la manière d'un obturateur (4) et n'est limité que peu de temps avant ou pendant le processus de fermeture de la conduite (1).

13. Dispositif selon la revendication 8, **caractérisé en ce que** le dispositif de type obturateur (4) et l'élément de fermeture mobile (8) sont reliés l'un à l'autre de sorte que ceux-ci se déplacent ensemble, une relation mécanique directe et/ou un accouplement à commande électronique étant avantageusement prévu.

14. Procédé de fermeture réversible de conduites (1) pour matériaux en vrac (3) utilisant une disposition de soupapes selon l'une quelconque des revendications précédentes comprenant les mesures de :
i) production d'un cône d'évacuation à partir du matériau (3) et d'au moins un espace (6) sans matériau (3) à l'intérieur de la conduite (1) par au moins un dispositif de type obturateur (4),
ii) rotation d'au moins un élément de fermeture mobile (8) autour de l'axe longitudinal de la conduite (1) ou autour d'un axe s'étendant parallèlement à celui-ci ou autour d'un axe s'étendant perpendiculairement à l'axe longitudinal de la conduite (1) ou déplacement d'au moins un élément de fermeture mobile (8) de manière oblique par rapport à l'axe longitudinal de la conduite (1) d'une position ouverte à une position fermée, dans lequel
iii) l'élément de fermeture mobile (8) ou un élément de fermeture statique (7) se trouve au moins en partie dans l'espace (6) sans matériau (3) en position fermée.

15. Procédé selon la revendication 14, **caractérisé en ce que** la fermeture de la conduite (1) se déroule en deux étapes au moins, dans lequel dans la première étape, le flux de matériau est complètement interrompu par la fermeture partielle de la section de conduite et dans la deuxième étape la conduite est complètement fermée.

16. Procédé selon la revendication 14, **caractérisé en ce que** l'élément de fermeture mobile (8) se déplace lors de la fermeture dans une position de manière à former, entre les parois de la conduite (1) et/ou d'autres éléments de fermeture (7, 8), au moins une zone d'étanchéité (9) qui se trouve en cas de fermeture complète de la conduite (1) dans l'espace creux (6) sans matériau en vrac (3) à l'extérieur du cône d'évacuation (5).

17. Procédé selon la revendication 14, **caractérisé en ce que** la production d'un cône d'évacuation (5) à partir du matériau (3) et d'au moins un espace creux (6) sans matériau en vrac (3) à l'intérieur de la conduite (1) est effectuée par au moins un dispositif de type obturateur (4) en même temps ou temporellement avant le début du déplacement de l'élément de fermeture mobile (8) de sorte que le dispositif (4) ne limite pas en permanence la section libre de la conduite.

18. Procédé selon la revendication 14, **caractérisé en ce que** l'activation du dispositif de type obturateur (4) et du processus de fermeture sont en relation active mécanique et/ou électronique directe et ne sont déclenchées de manière avantageuse que par un processus de régulation ou de réglage.
